# EUROPEAN PATENT APPLICATION

(11) **EP 4 207 368 A1**
(43) Date of publication of application: **05.07.2023**
(21) Application number: 20950697.1
(22) Date of filing: 27.08.2020
(51) Int. Cl.: H01M 4/36, H01M 4/583

(54) **POSITIVE ELECTRODE MATERIAL, AND ELECTROCHEMICAL APPARATUS AND ELECTRONIC APPARATUS COMPRISING SAME**

(71) Applicant: Ningde Amperex Technology Ltd., Ningde City, Fujian Province 352100 (CN)
(72) Inventor: LIU, Xiaolang, Ningde, Fujian 352100 (CN); ZHOU, Molin, Ningde, Fujian 352100 (CN); XU, Leimin, Ningde, Fujian 352100 (CN); LU, Yuhao, Ningde, Fujian 352100 (CN)
(74) Representative: Klunker IP Patentanwälte PartG mbB
(86) International application number: PCT/CN2020/111604
(87) International publication number: WO 2022/041025

(57) **Abstract**

This application relates to a positive electrode material, and an electrochemical apparatus and an electronic apparatus containing the same. This application provides a positive electrode material, including a composite material, where the composite material includes a metal fluoride, a molar ratio of fluorine F to metal element M in the metal fluoride is y, and a molar ratio of fluorine F to metal element M in the composite material is z, where y < z ≤ y + 2; and M includes at least one of Al, Cu, Co, Ni, Mn, Fe, or Ag. The positive electrode material in this application has advantages such as wide raw material sources, simple preparation processes, easy to operate, and low production costs. Lithium batteries prepared by using the positive electrode material in this application have increased specific capacity and improved rate performance and cycling performance of the positive electrode material, and good charge and discharge performance.

## Description

### TECHNICAL FIELD

This application relates to the field of energy storage, specifically to a positive electrode material, and an electrochemical apparatus and an electronic apparatus containing the same, and in particular to an all-solid-state lithium secondary battery.

### BACKGROUND

With popularity of consumer electronic products such as notebook computers, mobile phones, tablet computers, mobile power supplies, and drones, requirements for electrochemical apparatuses are increasingly stringent. For example, batteries are not only required to be light but also required to have high capacity and long service life. Lithium-ion batteries have occupied the mainstream position in the market due to outstanding advantages such as high energy density, high safety, no memory effect, and long service life.

### SUMMARY

Embodiments of this application provide a positive electrode material, in an attempt to resolve at least one problem existing in the related field to at least some extent. The embodiments of this application further provide a positive electrode, an electrochemical apparatus, and an electronic apparatus using such positive electrode material.

In an embodiment, this application provides a positive electrode material, including a composite material, where the composite material includes a metal fluoride, a molar ratio of fluorine F to metal element M in the metal fluoride is y, and a molar ratio of fluorine F to metal element M in the composite material is z, where y < z ≤ y + 2; and M includes at least one of Al, Cu, Co, Ni, Mn, Fe, or Ag.

In another embodiment, this application provides a method for preparing composite material, where the method includes:
(1) mixing and drying a metal fluoride and graphite fluoride; and
(2) performing annealing at 200°C to 600°C for 10 hr to 72 hr, crushing, and sieving to obtain a composite material; where
   a molar ratio of fluorine F to metal element M in the metal fluoride is y, and a molar ratio of fluorine F to metal element M in the positive electrode material is z, where y < z ≤ y + 2; and
   M includes at least one of Al, Cu, Co, Ni, Mn, Fe, or Ag.

In another embodiment, this application provides a positive electrode, including the positive electrode material according to the embodiment of this application.

In another embodiment, this application provides an electrochemical apparatus, including the positive electrode according to the embodiment of this application.

In some embodiments, the electrochemical apparatus is a all-solid-state lithium secondary battery. In some embodiments, the all-solid-state lithium secondary battery includes a positive electrode, a negative electrode, and a solid-state electrolyte. In some embodiments, the positive electrode includes the positive electrode material in the foregoing embodiment.

In another embodiment, this application provides an electronic apparatus, including the electrochemical apparatus according to the embodiment of this application.

The positive electrode material in this application has advantages such as wide raw material sources, simple preparation processes, easy to operate, and low production costs. Lithium batteries prepared by using the positive electrode material in this application have increased specific capacity and improved rate performance and cycling performance of the positive electrode material, and good charge and discharge performance.

Additional aspects and advantages of the embodiments of this application are partly described and presented in subsequent descriptions, or explained by implementation of the embodiments of this application.

### BRIEF DESCRIPTION OF DRAWINGS

To describe embodiments of this application, the following briefly describes the accompanying drawings required for describing the embodiments of this application or the prior art. Apparently, the accompanying drawings described below are merely some embodiments of this application. Persons skilled in the art may still derive drawings for other embodiments from structures shown in these accompanying drawings without creative efforts.
FIG. 1 is a schematic diagram of an electrochemical reaction of a composite positive electrode active material after first-cycle charging and discharging in Example 9 of this application.
FIG. 2 shows curves of capacity retention rates, that vary with the number of cycles, of all-solid-state lithium secondary batteries of Comparative Example 2, Comparative Example 4, and Example 4 of this application.

### DESCRIPTION OF EMBODIMENTS

Embodiments of this application are described in detail below. The embodiments of this application should not be construed as any limitations on this application.

Quantities, ratios, and other values are presented in the format of range in this specification. It should be understood that such format of range is used for convenience and simplicity and should be flexibly understood as including not only values explicitly designated as falling within the range but also all individual values or sub-ranges covered by the range as if each value and sub-range are explicitly designated.

In specific embodiments and claims, a list of items connected by the terms "one of", "one piece of", and "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. The item A may include a single element or a plurality of elements. The item B may include a single element or a plurality of elements. The item C may include a single element or a plurality of elements.

In specific embodiments and claims, a list of items connected by the terms "at least one of", "at least one piece of", and "at least one kind of" or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (exclusive of C), A and C (exclusive of B), B and C (exclusive of A), or all of A, B, and C. The item A may include a single element or a plurality of elements. The item B may include a single element or a plurality of elements. The item C may include a single element or a plurality of elements.

### I. Positive electrode material

In some embodiments, this application provides a positive electrode material, including a composite material, where the composite material includes a metal fluoride, a molar ratio of fluorine F to metal element M in the metal fluoride is y, and a molar ratio of fluorine F to metal element M in the composite material is z, where y < z ≤ y + 2; and M includes at least one of Al, Cu, Co, Ni, Mn, Fe, or Ag.

In some embodiments, M includes Cu, Fe, or a combination thereof.

In some embodiments, y < z ≤ y + 1.5. In some embodiments, y < z ≤ y + 0.05, y < z ≤ y + 0.1, y < z ≤ y + 0.15, y < z ≤ y + 0.2, y < z ≤ y + 0.5, y < z ≤ y + 0.7, y < z ≤ y + 0.9, y < z ≤ y + 1, or y < z ≤ y + 1.2.

In some embodiments, the composite material further includes graphite fluoride, a constitutional formula of the graphite fluoride is CFₓ, and a molar ratio of fluorine F to carbon C in CFₓ is x, where 0 < x ≤ 1.

In some embodiments, 0 < x ≤ 0.9. In some embodiments, 0 < x ≤ 0.8. In some embodiments, 0 < x ≤ 0.7. In some embodiments, 0 < x ≤ 0.6. In some embodiments, 0 < x ≤ 0.5, 0 < x ≤ 0.4, 0 < x ≤ 0.3, or 0 < x ≤ 0.2.

In some embodiments, a mass ratio of the graphite fluoride to the metal fluoride is w, where 0 < w ≤ 0.2. In some embodiments, 0 < w ≤ 0.15. In some embodiments, 0 < w ≤ 0.1. In some embodiments, 0 < w ≤ 0.05. In some embodiments, w may alternatively be 0.02, 0.03, 0.06, 0.07, or the like.

In some embodiments, the metal fluoride includes at least one of CoF₃, NiF₃, MnF₂, MnF₃, FeF₃, FeF₂, AlF₃, or CuF₂. In some embodiments, the metal fluoride includes FeF₃, CuF₂, or a combination thereof.

In some embodiments, the positive electrode material contains lithium. In some embodiments, the positive electrode material contains no lithium.

In some embodiments, the composite material included in the positive electrode material may be denoted as MF_{y}.w(CFₓ), where M, w, x, y are defined as above respectively.

### II. Preparation method of composite material

The embodiments of this application provide a method for preparing composite material. The method includes:
(1) mixing and drying a metal fluoride and graphite fluoride; and
(2) performing annealing at 200°C to 600°C for 10 hr to 72 hr, crushing, and sieving to obtain a composite material; where
   a molar ratio of fluorine F to metal element M in the metal fluoride is y, and a molar ratio of fluorine F to metal element M in the composite material is z, where y < z ≤ y + 2; and
   M includes at least one of Al, Cu, Co, Ni, Mn, Fe, or Ag.

In some embodiments, the metal fluoride and the graphite fluoride are defined as above.

In some embodiments, mixing is performed by using a ball mill, a V-shaped mixer, a three-dimensional mixer, an air stream mixer, or a horizontal mixer. In some embodiments, mixing is high-energy ball milling mixing.

In some embodiments, ball milling is wet ball milling or dry ball milling. In some embodiments, ball milling is wet ball milling.

In some embodiments, a ball milling dispersant is used during ball milling. In some embodiments, the ball milling dispersant includes absolute ethanol.

In some embodiments, in the ball milling step, a volume ratio of a ball milling material to a grinding ball is 1:3 to 1:20. In some embodiments, the volume ratio of the ball milling material to the grinding ball is 1:10.

In some embodiments, a rotation speed in the ball milling step is 300 r/min to 1200 r/min. In some embodiments, the rotation speed in the ball milling step is 800 r/min.

In some embodiments, a ball milling time is 4 hr to 24 hr. In some embodiments, the ball milling time is 4 hr, 6 hr, 10 hr, 15 hr, 20 hr, 24 hr, or in a range defined by any two of these values.

In some embodiments, a drying temperature is 60°C to 120°C. In some embodiments, the drying temperature is 60°C, 70°C, 80°C, 100°C, 120°C, or in a range defined by any two of these values.

In some embodiments, an annealing temperature is 200°C to 600°C. In some embodiments, the annealing temperature is 200°C, 250°C, 300°C, 350°C, 400°C, 500°C, 600°C, or in a range defined by any two of these values.

In some embodiments, an annealing time is 10 hr to 72 hr. In some embodiments, the annealing time is 10 hr, 15 hr, 20 hr, 25 hr, 30 hr, 35 hr, 40 hr, 50 hr, 60 hr, 65 hr, 72 hr, or in a range defined by any two of these values.

In some embodiments, annealing treatment is performed in an atmosphere sintering furnace. In some embodiments, the atmosphere sintering furnace may be an atmosphere tube furnace, an atmosphere box furnace, or another sintering furnace with a similar atmosphere protection function.

In some embodiments, an atmosphere used by the atmosphere sintering furnace is inert gas. In some embodiments, the inert gas is high purity argon or high purity nitrogen.

In recent years, with the emergence of electric vehicles and 5G era, people propose increasingly urgent requirements for lithium batteries with high energy density and high safety performance. Due to high specific capacity (3860 mAh/g) and low electrochemical potential (-3.040 V vs. standard hydrogen electrode), metal lithium is considered as an ideal negative electrode material with high energy density. Therefore, solid-state lithium batteries with lithium metal used as a negative electrode have become a hot research topic currently. Most conventional lithium-ion batteries use organic liquid-state electrolytes or gel electrolytes, and the flammable and combustible organic liquids bring about huge safety hazards to battery systems.

The solid-state lithium battery and the conventional lithium-ion battery are basically the same in working principle, and a change in structure lies in that the conventional organic liquid-state electrolyte and separator are replaced with a solid-state electrolyte, which makes the battery safer. In addition, the solid-state lithium battery has a simpler structure, and is mainly formed by a positive electrode, a solid-state electrolyte, and a negative electrode. Currently, most positive electrodes used in the solid-state lithium batteries are conventional lithium-containing positive electrode materials, for example, LiCoO₂ and LiFePO₄. Specific capacity of these lithium-containing positive electrode materials is much lower than that of the negative electrode, and thus cannot satisfy requirements of all-solid-state lithium batteries with high energy density. Therefore, the solid-state lithium batteries with lithium metal used as a negative electrode must be combined with positive electrode materials with higher energy density. A metal fluoride (for example, FeF₃, FeF₂, and CuF₂) positive electrode material can provide an energy density up to 1000 Wh/Kg to 1600 Wh/Kg, much higher than 600 Wh/Kg to 800 Wh/Kg of a LiCoO₂ system, and thus has a great application potential. In addition, most lithium-free positive electrode materials such as the metal fluoride use cheap iron, and thus have advantages such as rich resources, low costs, and environmental friendliness.

Currently, the lithium-free positive electrode materials such as the metal fluoride have the following non-negligible shortcomings. First, conductivity of the metal fluoride is generally low, and it is reported that conductivity of FeF₃ is only 10⁻¹⁷ S/cm, close to that of an insulator; and during charging and discharging, a discharge voltage is lower than a charge voltage, that is, the so-called voltage hysteresis occurs, and the material has poor rate performance and cycling stability performance. Second, during charging and discharging, transition metal ions are likely to be leached out from the positive electrode material, and enter the electrolyte to undergo side reactions with the electrolyte, which accelerates capacity decay during cycling.

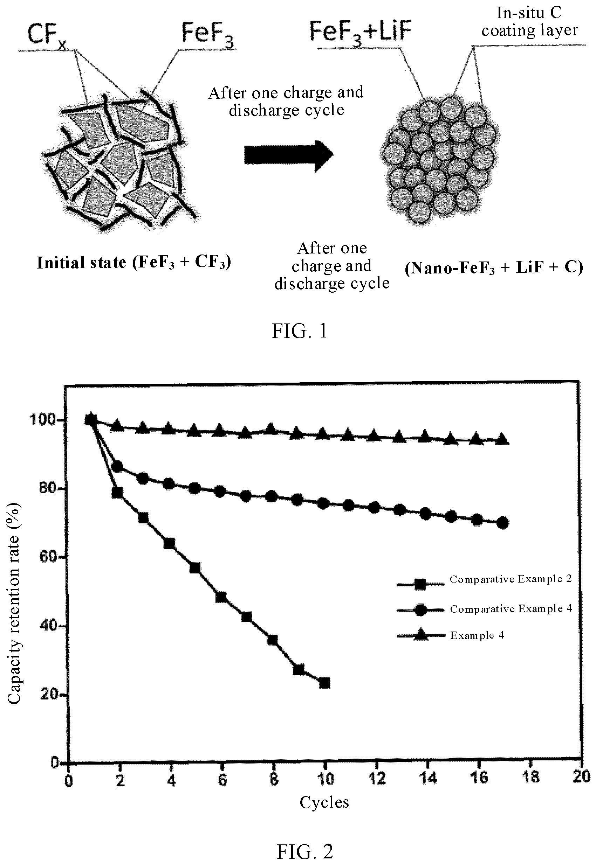

To resolve the foregoing problems, this application provides a positive electrode material of a lithium battery. An initial state of the positive electrode material is a composite material of the metal fluoride and the graphite fluoride. Compared with the positive electrode material of the metal fluoride, the composite material of the metal fluoride and the graphite fluoride in this application being used as the positive electrode material has the following advantages: (1) the graphite fluoride added can significantly increase specific capacity of the positive electrode material; (2) as shown in FIG. 1, during first-cycle discharging, the graphite fluoride on a surface of the positive electrode material undergoes chemical reactions with lithium ions released from the negative electrode to generate nanocarbon in-situ, thereby improving conductivity of the positive electrode, and helping stabilize a discharge voltage and improve discharge efficiency; and (3) as shown in FIG. 1, after the first-cycle discharging reaction is completed, the graphite fluoride generates LiF in-situ in addition to nanocarbon, and these products may be used as lithium sources for making up for lithium loss of the positive electrode material in multiple cycles, thereby improving long-term cycling stability performance.

In addition, this application achieves the following beneficial effects.
(1) The composite positive electrode material of the metal fluoride and the graphite fluoride in this application has higher specific capacity and improved rate performance and cycling performance.
(2) The positive electrode material of the lithium battery provided in this application has wide raw material sources, simple preparation processes, and low production costs, and is easy to operate.
(3) An all-solid-state lithium secondary battery prepared by using the positive electrode material in this application has good charge and discharge performance, and has a large application prospect in the field of batteries for 3C electronics products and electric vehicles.

### III. Electrochemical apparatus

The embodiments of this application provide an electrochemical apparatus, where the electrochemical apparatus includes any apparatus in which an electrochemical reaction takes place.

In some embodiments, the electrochemical apparatus in this application includes: a negative electrode having a negative electrode active substance capable of occluding and releasing metal ions, the positive electrode according to the embodiments of this application, an electrolyte, and a separator sandwiched between the positive electrode and the negative electrode.

In some embodiments, the electrochemical apparatus in this application includes but is not limited to a secondary battery.

In some embodiments, the electrochemical apparatus is a lithium secondary battery.

In some embodiments, the lithium secondary battery includes but is not limited to a lithium metal secondary battery, a lithium-ion secondary battery, a lithium polymer secondary battery, a lithium-ion polymer secondary battery, or an all-solid-state lithium secondary battery.

### 1. Negative electrode

A material, composition, and preparation method of a negative electrode used in the electrochemical apparatus in this application may include any technology disclosed in the prior art. In some embodiments, the negative electrode is the negative electrode recorded in US patent application US9812739B, which is incorporated into this application by reference in its entirety.

In some embodiments, the negative electrode includes a current collector and a negative electrode active material layer located on the current collector. In some embodiments, the negative electrode active material layer includes a negative electrode active material. In some embodiments, the negative electrode active material includes but is not limited to lithium metal, structured lithium metal, natural graphite, artificial graphite, mesocarbon microbeads (MCMB), hard carbon, soft carbon, silicon, a silicon-carbon composite, a silicon-oxide material, Li-Sn alloy, Li-Sn-O alloy, Sn, SnO, SnO₂, spinel-structure lithiated TiO₂-Li₄Ti₅O₁₂, Li-Al alloy, or any combination thereof.

In some embodiments, the negative electrode active material layer includes a binder. In some embodiments, the binder includes but is not limited to polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

In some embodiments, the negative electrode active material layer includes a conductive material. In some embodiments, the conductive material includes but is not limited to natural graphite, artificial graphite, carbon black, acetylene black, Ketjen black, carbon fibers, metal powder, metal fibers, copper, nickel, aluminum, silver, or a polyphenylene derivative.

In some embodiments, the current collector includes but is not limited to copper foil, nickel foil, stainless steel foil, titanium foil, nickel foam, copper foam, or a polymer substrate coated with conductive metal.

In some embodiments, the negative electrode may be obtained by using the following method: mixing the active material, the conductive material, and the binder in a solvent to prepare an active material composition, and applying the active material composition onto the current collector.

In some embodiments, the solvent may include but is not limited to deionized water or N-methylpyrrolidone.

In some embodiments, the negative electrode in the all-solid-state lithium secondary battery is metal lithium foil.

### 2. Positive electrode

The embodiments of this application provide a positive electrode. In some embodiments, the positive electrode in the all-solid-state lithium secondary battery includes the positive electrode material and conductive agent according to any one of the embodiments of this application.

In some embodiments, the positive electrode includes a current collector and a positive electrode active material layer located on the current collector. The positive electrode active material layer includes the positive electrode material according to the embodiments of this application.

In some embodiments, the positive electrode active material layer further includes a binder and/or a conductive agent. The binder enhances binding between particles of the positive electrode active material, and binding between the positive electrode active material and the current collector.

In some embodiments, the binder includes at least one of the following compounds: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

In some embodiments, the conductive agent includes at least one of the following compounds: conductive carbon black, carbon fibers, acetylene black, Ketjen black, graphene, or carbon nanotubes.

In some embodiments, the current collector may include but is not limited to aluminum.

The positive electrode may be prepared by using a preparation method well-known in the art. For example, the positive electrode may be obtained by using the following method: mixing the active material, the conductive material, and the binder in a solvent to prepare an active material composition, and applying the active material composition onto the current collector. In some embodiments, the solvent may include but is not limited to N-methylpyrrolidone.

### 3. Electrolyte

An electrolyte that can be used in the embodiments of this application may be an electrolyte known in the prior art.

In some embodiments, the electrolyte includes an organic solvent, a lithium salt, and an additive. The organic solvent of the electrolyte according to this application may be any organic solvent known in the prior art which can be used as a solvent of the electrolyte. The electrolytic salt used in the electrolyte according to this application is not limited, and may be any electrolytic salt known in the prior art. The additive of the electrolyte according to this application may be any additive known in the prior art which can be used as an additive of the electrolyte.

In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate.

In some embodiments, the lithium salt includes at least one of an organic lithium salt or an inorganic lithium salt.

In some embodiments, the lithium salt includes but is not limited to lithium hexafluorophosphate (LiPF₆), lithium tetrafluoroborate (LiBF₄), lithium difluorophosphate (LiPO₂F₂), lithium bistrifluoromethanesulfonimide LiN(CF₃SO₂)₂ (LiTFSI), lithium bis(fluorosulfonyl)imide Li(N(SO₂F)₂) (LiFSI), lithium bis(oxalate) borate LiB(C₂O₄)₂ (LiBOB), or lithium difluoro(oxalato)borate LiBF₂(C₂O₄) (LiDFOB).

In some embodiments, a concentration of the lithium salt in the electrolyte is 0.5 mol/L to 3 mol/L, 0.5 mol/L to 2 mol/L, or 0.8 mol/L to 1.5 mol/L.

In some embodiments, the solid-state electrolyte used for the all-solid-state lithium secondary battery includes at least one of the following compounds: Li₃YCl₆, Li₃YBr₆, Li₃OCl, LiPON, Li_{0.5}La_{0.5}TiO₃, Li₁₊ₓAlₓTi₂₋ₓ(PO₄)₃, Li₇La₃Zr₂O₁₂, Li₁₀GeP₂S₁₂ (LGPS), L1_{9.54}Si_{1.74}P_{1.44}S_{11.7}Cl_{0.3}, L1_{3.25}Ge_{0.25}P_{0.75}S₄, Li₁₁AlP₂S₁₂, or Li7_{P3}S₁₁.

### 4. Separator

In some embodiments, a separator is disposed between the positive electrode and the negative electrode to prevent short circuit. A material and shape of the separator that can be used in this application are not specifically limited, and may be any technology disclosed in the prior art. In some embodiments, the separator includes a polymer, an inorganic substance, or the like formed by a material stable to the electrolyte in this application.

For example, the separator may include a substrate layer and a surface treatment layer. The substrate layer is a non-woven fabric, a membrane, or a composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is disposed on at least one surface of the substrate layer, and the surface treatment layer may be a polymer layer, an inorganic substance layer, or a layer formed by mixing a polymer and an inorganic substance.

The inorganic substance layer includes inorganic particles and a binder. The inorganic particles are selected from a combination of one or more of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from a combination of one or more of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, and polyhexafluoropropylene.

The polymer layer includes a polymer, and a material of the polymer is selected from at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

### IV. Electronic apparatus

The electronic apparatus in this application may be any apparatus that uses the electrochemical apparatus according to the embodiments of this application.

In some embodiments, the electronic apparatus includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

The following describes preparation of lithium battery by using a lithium battery as an example and with reference to specific examples. Persons skilled in the art understand that the preparation method described in this application is only an example, and that all other suitable preparation methods fall within the scope of this application.

### Examples

The following describes performance evaluation performed based on examples and comparative examples of the all-solid-state lithium secondary battery in this application.

### I. Test method

### 1. Powder X-ray diffraction (XRD) test:

Powders of the positive electrode active materials prepared in the examples and comparative examples were subjected to the XRD test. The reference standard of the test was JIS K 0131-1996 general rules for X-ray diffraction analysis. Test operating conditions were set: in CuK_{α} radiation (λ = 1.5418 Å), an operating current was 250 mA, continuous scanning was used, an operating voltage was 40 kV, a scanning range 2θ was 10-70° with a step of 0.1°, and a scanning speed was 0.2 second/step.

The XRD test principle is that when a monochromatic X-ray is incident on a crystal, because the crystal is composed of crystal cells formed by regularly arranged atoms, and the distance between these regularly arranged atoms has the same order of magnitude as the wavelength of the incident X-ray, the X-ray scattered by different atoms interferes with each other and strong X-ray diffraction is produced in some special directions. By comparing the measured lattice plane spacing and diffraction intensity of the material with diffraction data of a standard phase, a phase existing in the material is determined.

### 2. Scanning electron microscope (SEM) test:

The powders of the positive electrode active materials prepared in the examples and comparative examples were subjected to the SEM test. The reference standard of the SEM test was JY/T 010-1996 general rules for analytical scanning electron microscopy. The scanning electron microscope test principle is that a scanning electron microscope is manufactured based on interaction between electrons and substances, which excites various physical information by scanning a sample with a fine focused high-energy electron beam. By receiving, enlarging, and displaying these information, observation of surface morphology of the test sample is obtained.

### 3. Charge and discharge test:

A gram capacity test of the all-solid-state lithium secondary batteries prepared in the comparative examples and examples used a LAND tester (model CT2001A) at a test environment temperature being room temperature (25°C). A test method was that the batteries were discharged to a discharge cut-off voltage at a constant current of a specified rate, and then charged to a charge cut-off voltage at a constant current of a specified rate. Unless otherwise explicitly indicated, the charge and discharge test rates in this application were all 0.1C, with reference to a theoretical specific capacity of FeF₃ being 712 mAh/g and a theoretical specific capacity of CuF₂ being 893 mAh/g.

### II. Preparation of all-solid-state lithium secondary battery

The positive electrode active materials and conductive agents Ketjen black prepared in the examples and comparative examples were mixed to uniformity. The obtained powder and the solid-state electrolyte Li₇P₃S₁₁ were placed in a stainless steel cold pressing mold, and cold pressed under a pressure of 300 MPa to obtain a double-layer sheet of the positive electrode and the solid-state electrolyte. A mass ratio of the positive electrode active material, the solid-state electrolyte Li₇P₃S₁₁, and the conductive agent Ketjen black was 60:30:10. A lithium metal foil was placed on a surface of the double-layer sheet other than the solid-state electrolyte, then placed in the cold pressing mold together, and further subjected to a pressure of 200 MPa, so as to ensure full contact between the lithium metal and the solid-state electrolyte membrane, to obtain an all-solid-state lithium secondary battery.

### III. Preparation of positive electrode active material

### Comparative Example 1

10 g of FeF₃ was taken and put into a 50 ml agate jar, then 40 φ5 mm agate balls and 5 φ10 mm agate balls were added, and ball milling was performed for 12 hr at a rotation speed of 500 r/min. After ball milling, the material stuck to the wall of the jar, which showed that the ball milling was insufficient.

### Comparative Example 2

10 g of FeF₃ was taken and put into the 50 ml agate jar, then 40 φ5 mm agate balls and 5 φ10 mm agate balls were added, 20 ml absolute ethanol was added, and ball milling was performed for 12 h at a rotation speed of 800 r/min. The obtained material was taken out and transferred to a vacuum oven for drying at 80°C, and the dried material was sieved with a 400-mesh sieve to obtain a positive electrode active material FeF₃.

### Comparative Example 3

10 g of CuF₂ was taken and put into the 50 ml agate jar, then 40 φ5 mm agate balls and 5 φ10 mm agate balls were added, 20 ml absolute ethanol was added, and ball milling was performed for 12 h at a rotation speed of 500 r/min. After ball milling, the material was uniformly dispersed in the ethanol, without sticking to the wall and sinking to the bottom. The obtained material was taken out and transferred to the vacuum oven for drying at 80°C, and the dried material was sieved with the 400-mesh sieve to obtain a positive electrode active material CuF₂.

### Comparative Example 4

10 g of FeF₃ and 0.5 g of conductive carbon powder were taken and put into the 50 ml agate jar, then 40 φ5 mm agate balls and 5 φ10 mm agate balls were added, 20 ml absolute ethanol was added, and ball milling was performed for 12 h at a rotation speed of 500 r/min. After ball milling, the material was taken out and transferred to the vacuum oven for drying at 80°C, and the dried material was sieved with the 400-mesh sieve to obtain FeF₃ coated with carbon as a positive electrode active material.

### Example 1

10 g of FeF₃ was taken and put into the 50 ml agate jar, then 40 φ5 mm agate balls and 5 φ10 mm agate balls were added, 20 ml absolute ethanol was added, and ball milling was performed for 12 h at a rotation speed of 500 r/min. After ball milling, the material was uniformly dispersed in the ethanol, without sticking to the wall or sinking to the bottom.

### Examples 2 to 13

Metal fluoride MF_{y} and graphite fluoride CFₓ were put into the 50 ml agate jar, then 40 φ5 mm agate balls and 5 φ10 mm agate balls were added, 20 ml absolute ethanol was added, and ball milling was performed for 12 h at a rotation speed of 500 r/min. After ball milling, the material was taken out and transferred to the vacuum oven for drying at 80°C, and then sieved with a 300-mesh or 400-mesh sieve to obtain a homogeneous mixture of the graphite fluoride and the metal fluoride. The material of the obtained mixture was transferred to a tube furnace. Under the protection of a high purity argon gas flow of 0.3 L/min, the temperature was increased to 300-500°C at a temperature rise rate of 3°C/min and maintained, and then the material was annealed for 24 hr. After annealing, the material was cooled to room temperature with the furnace, and then crushed and sieved to obtain a composite material MF_{y}.w(CFₓ) of the metal fluoride and the graphite fluoride as a positive electrode active material in this application, where y is a molar ratio of fluorine F to metal element M in the metal fluoride, z is a molar ratio of fluorine F to metal element M in the composite material, x is a molar ratio of fluorine F to carbon C in CFₓ, and w is a mass ratio of the graphite fluoride to the metal fluoride. No annealing treatment was performed after drying in Example 7. Table 1 shows types and amounts of the used raw materials and process parameters in Examples 2 to 13.

**Table 1**

| No. | Type and amount of metal fluoride | Type and amount of graphite fluoride | Annealing temperature | Final sieving | Composition of MF_{y}.w(CFₓ) | Value of z |
|---|---|---|---|---|---|---|
| Example 2 | FeF₃: 10 g | CF_{0.9}: 0.2 g | 300°C | 400-mesh | FeF₃.2%CF_{0.9} | 3.08 |
| Example 3 | FeF₃: 10 g | CF_{0.9}: 0.5 g | 300°C | 300-mesh | FeF₃.5%CF_{0.9} | 3.20 |
| Example 4 | FeF₃: 10 g | CF_{0.9}: 1 g | 300°C | 300-mesh | FeF₃.10%CF₀₉ | 3.39 |
| Example 5 | FeF₃: 10 g | CF_{0.9}: 1.5 g | 300°C | 300-mesh | FeF₃.15%CF_{0.9} | 3.59 |
| Example 6 | FeF₃: 10 g | CF_{0.9}: 2.5 g | 300°C | 300-mesh | FeF₃.25%CF_{0.9} | 3.97 |
| Example 7 | FeF₃: 10 g | CF_{0.7}: 0.5 g | - | - | FeF₃.5%CF_{0.7} | 3.23 |
| Example 8 | FeF₃: 10 g | CF_{0.7}: 0.7 g | 150°C | 400-mesh | FeF₃.5%CF_{0.7} | 3.23 |
| Example 9 | FeF₃: 10 g | CF_{0.7}: 0.5 g | 350°C | 400-mesh | FeF₃.5%CF_{0.7} | 3.23 |
| Example 10 | FeF₃: 10 g | CF_{0.7}: 0.5 g | 500°C | 400-mesh | FeF₃.5%CF_{0.7} | 3.23 |
| Example 11 | CuF₂: 10 g | CF_{0.2}: 0.6 g | 400°C | 300-mesh | CuF₂.6%CF_{0.2} | 2.39 |
| Example 12 | CuF₂: 10 g | CF_{0.5}: 0.6 g | 400°C | 300-mesh | CuF₂.6%CF_{0.5} | 2.29 |
| Example 13 | CuF₂: 10 g | CF_{0.8}: 0.6 g | 400°C | 300-mesh | CuF₂.6%CF_{0.8} | 2.23 |

| | | | | | | |
|---|---|---|---|---|---|---|
| "-" indicates that such treatment is not performed. | | | | | | |

Table 2 shows related performance test results of some examples and comparative examples.

**Table 2**

| No. | Composition of MF_{y}.w(CFₓ) | Is there any impurity phase | First-cycle discharge capacity (mAh/g) | First-cycle charge capacity (mAh/g) |
|---|---|---|---|---|
| Comparative Example 2 | FeF₃ | N/A | 329.7 | 167.3 |
| Comparative Example 3 | CuF₂ | N/A | 276.3 | 78.3 |
| Comparative Example 4 | FeF₃5%C | N/A | 356.6 | 226.5 |
| Example 2 | FeF₃.2%CF_{0.9} | N/A | 541.3 | 565.2 |
| Example 3 | FeF₃.5%CF_{0.9} | N/A | 576.2 | 558.2 |
| Example 4 | FeF₃.10%CF_{0.9} | N/A | 589.3 | 528.4 |
| Example 5 | FeF₃.15%CF_{0.9} | N/A | 603.9 | 489.6 |
| Example 6 | FeF₃.25%CF_{0.9} | N/A | 723.2 | 205.6 |
| Example 7 | FeF₃.5%CF_{0.7} | N/A | 377.5 | 232.9 |
| Example 8 | FeF₃.5%CF_{0.7} | N/A | 385.9 | 323.8 |
| Example 9 | FeF₃.5%CF_{0.7} | N/A | 554.8 | 458.7 |
| Example 10 | FeF₃.5%CF_{0.7} | A small amount of FeF₂ | 393.4 | 222.6 |
| Example 11 | CuF₂.6%CF_{0.2} | N/A | 397.2 | 318.6 |
| Example 12 | CuF₂.6%CF_{0.5} | N/A | 452.9 | 413.7 |
| Example 13 | CuF₂.6%CF_{0.8} | N/A | 478.5 | 455.4 |

Table 3 shows test results of some examples and comparative examples at different charge and discharge rates.

**Table 3**

| No. | Rate | First-cycle discharge capacity (mAh/g) | First-cycle charge capacity (mAh/g) | Discharge capacity after 20 cycles (mAh/g) | Charge capacity after 20 cycles (mAh/g) |
|---|---|---|---|---|---|
| Comparative Example 3 | 0.05C | 326.8 | 157.3 | 39.2 | 38.5 |
| Comparative Example 3 | 0.2C | 237.3 | 65.2 | \ | \ |
| Comparative Example 3 | 0.5C | 143.9 | 39.2 | \ | \ |
| Example 13 | 0.05C | 538.1 | 530.3 | 528.5 | 528.0 |
| Example 13 | 0.2C | 447.9 | 429.8 | 420.3 | 418.8 |
| Example 13 | 0.5C | 398.2 | 378.7 | 339.3 | 337.1 |

| | | | | | |
|---|---|---|---|---|---|
| "\" indicates that the battery has no charge and discharge capacity after 20 charge and discharge cycles. | | | | | |

It can be learned from the test results of Comparative Example 1 and Example 1 that when no dispersant is added for ball milling, the material seriously sticks to the wall of the jar, which shows that milling is insufficient. However, when absolute ethanol is used as the dispersant for wet milling, during ball milling, large particles crack under milling and impact of the ball milling medium, and the dispersant ethanol enters the formed cracks to prevent the cracks from closing, which effectively make the cracks expand quickly, thereby greatly improving ball milling efficiency.

It can be learned from the test results of Comparative Examples 2 and 4 and Examples 2 to 6 that adding CFₓ into FeF₃ can significantly improve a charge and discharge gram capacity of FeF₃, and the improvement effect on the charge and discharge gram capacity satisfies: composite treatment for graphite fluoride > coating treatment for conductive carbon > no treatment. The foregoing results show that element F added is one of the important factors for improving performance of the FeF₃ material.

It can be learned from the test results of Comparative Example 2 and Examples 7 to 10 that the annealing temperature significantly affects a gram capacity of the composite positive electrode active material of the graphite fluoride and ferric fluoride. When no annealing treatment is performed, the first-cycle discharge and charge capacities of the material are 377.5 mAh/g and 232.9 mAh/g respectively. With the increase in the annealing temperature from 150°C to 350°C, the first-cycle discharge and charge capacities of the material are greatly increased, being 554.8 mAh/g and 458.7 mAh/g respectively. This is because with the increase in the temperature, CFₓ is more likely to undergo a diffusion reaction with FeF₃ lattice.

It can be learned from the test results of Comparative Example 3 and Examples 11 to 13 that performing the composite treatment for copper fluoride and the graphite fluoride can also improve electrochemical performance of the copper fluoride material. In addition, the charge and discharge capacity of the composite positive electrode material is associated with the molar ratio x of F to C in the graphite fluoride material. A higher molar ratio of F to C is more conducive to improving a discharge gram capacity of the material.

It can be learned from the test results of Comparative Example 3 and Example 13 that with CFₓ added into copper fluoride, rate performance and cycling performance of the all-solid-state lithium secondary battery prepared by using the positive electrode active material in this application are significantly improved. Under the same condition, as compared with charging and discharging at 0.05C, the decrease in discharge and charge capacities at 0.5C in Example 13 is obviously reduced, which shows that the graphite fluoride added significantly improves the charge and discharge rate performance of the material. After 20 stable charge and discharge cycles, the solid-state lithium battery prepared by using the positive electrode material in this application is charged and discharged at different rates, with the capacity retention rate above 85%. However, in the comparative examples, the capacities greatly decay, and especially at 0.2C and 0.5C, there is almost no charge and discharge capacity after 20 cycles. This is because after the metal fluoride material and the graphite fluoride material are composited in the example, during first-cycle discharging, the graphite fluoride on the surface of the positive electrode material can undergo a conversion reaction with lithium to generate nanocarbon in-situ, thereby improving conductivity of the positive electrode, and helping improve kinetics of the conversion reaction. During first-cycle discharging, the graphite fluoride generates lithium fluoride in-situ in addition to nanocarbon, and the lithium fluoride may be used as a lithium source for making up for lithium loss of the positive electrode material in multiple cycles, thereby improving long-term cycling stability performance of the material.

FIG. 2 shows curves of capacity retention rates, that vary with the number of cycles, of all-solid-state lithium secondary batteries of Comparative Example 2, Comparative Example 4, and Example 4 of this application. It can be learned from FIG. 2 that adding CFₓ into FeF₃ can significantly improve the capacity retention rate of the all-solid-state lithium secondary battery.

References to "some embodiments", "some of the embodiments", "an embodiment", "another example", "examples", "specific examples", or "some examples" in this specification mean the inclusion of specific features, structures, materials, or characteristics described in the embodiment or example in at least one embodiment or example of this application. Therefore, descriptions in various places throughout this specification, such as "in some embodiments", "in the embodiments", "in an embodiment", "in another example", "in an example", "in a specific example", or "examples", do not necessarily refer to the same embodiment or example of this application. In addition, a specific feature, structure, material, or characteristic herein may be combined in any appropriate manner in one or more embodiments or examples.

Although illustrative embodiments have been demonstrated and described, persons skilled in the art should understand that the foregoing embodiments should not be construed as any limitation on this application, and that the embodiments may be changed, replaced, and modified without departing from the spirit, principle, and scope of this application.

## Claims

1. A positive electrode material, comprising a composite material, wherein the composite material comprises a metal fluoride, a molar ratio of fluorine F to metal element M in the metal fluoride is y, and a molar ratio of fluorine F to metal element M in the composite material is z, wherein y < z ≤ y + 2; and
M comprises at least one of Al, Cu, Co, Ni, Mn, Fe, or Ag.

2. The positive electrode material according to claim 1, wherein the composite material further comprises graphite fluoride, a constitutional formula of the graphite fluoride is CFₓ, and a molar ratio of fluorine F to carbon C in CFₓ is x, wherein 0 < x ≤ 1.

3. The positive electrode material according to claim 2, wherein a mass ratio of the graphite fluoride to the metal fluoride is w, wherein 0 < w ≤ 0.2.

4. The positive electrode material according to claim 1, wherein the metal fluoride comprises at least one of CoF₃, NiF₃, MnF₂, MnF₃, FeF₃, FeF₂, AlF₃, or CuF₂.

5. A method for preparing composite material, wherein the method comprises:
(1) mixing and drying a metal fluoride and graphite fluoride; and
(2) performing annealing at 200°C to 600°C for 10 hr to 72 hr, crushing, and sieving to obtain a composite material; wherein
a molar ratio of fluorine F to metal element M in the metal fluoride is y, and a molar ratio of fluorine F to metal element M in the composite material is z, wherein y < z ≤ y + 2; and
M comprises at least one of Al, Cu, Co, Ni, Mn, Fe, or Ag.

6. A positive electrode, comprising the positive electrode material according to any one of claims 1 to 4 or a composite material prepared by using the method according to claim 5.

7. An electrochemical apparatus, comprising the positive electrode according to claim 6.

8. The electrochemical apparatus according to claim 7, wherein the electrochemical apparatus is an all-solid-state lithium secondary battery.

9. An electronic apparatus, comprising the electrochemical apparatus according to claim 7 or 8.
